(19) **Europäisches Patentamt**

**European Patent Office**

**Office européen des brevets**

(11) Veröffentlichungsnummer : **0 281 548 B1**

(12) **EUROPÄISCHE PATENTSCHRIFT**

(45) Veröffentlichungstag der Patentschrift :
**15.05.91 Patentblatt 91/20**

(51) Int. Cl.$^5$ : **A01K 1/01**

(21) Anmeldenummer : **88890040.4**

(22) Anmeldetag : **02.03.88**

(54) **Förderanlage für Stallmist.**

(30) Priorität : **05.03.87 AT 494/87**

(43) Veröffentlichungstag der Anmeldung :
**07.09.88 Patentblatt 88/36**

(45) Bekanntmachung des Hinweises auf die
Patenterteilung :
**15.05.91 Patentblatt 91/20**

(84) Benannte Vertragsstaaten :
**CH DE FR IT LI SE**

(56) Entgegenhaltungen :
**CA-A- 1 053 171**
**CH-A- 443 762**
**CH-A- 446 798**
**DE-A- 2 039 505**
**DE-A- 2 615 130**

(73) Patentinhaber : **SCHAUER**
**MASCHINENFABRIK GESELLSCHAFT M.B.H.**
**& CO. KG**
**AT-4731 Prambachkirchen 41 (AT)**

(72) Erfinder : **Schauer,**
**Herbert**
**4731Prambachkirchen 41 (AT)**

(74) Vertreter : **Hübscher, Heiner, Dipl.-Ing. et al**
**Spittelwiese 7**
**A-4020 Linz (AT)**

**Beschreibung**

Die Erfindung betrifft eine Förderanlage für Stallmist nach dem Oberbegriff des Patentanspruches 1.

Derartige Förderanlagen sind aus der DE-A-26 15 130 und 26 46 974 bekannt, wobeinach der DE-A-26 15 130 zwischen der Zylinder-Kolbeneinheit und dem als Horizontalförderer ausgebildeten Zubringerförderer noch ein ins Schnelle übersetzendes Seilzug-Rollengetriebe angeordnet ist.

Prinzipiell zeichnen sich solche Förderanlagen wegen der Verwendung einer gemeinsamen Zylinder-Kolbeneinheit für den Antrieb des Förderkolbens oder -schiebers und den meist als Schubstangenförderer ausgebildeten Zubringerförderer durch einen einfachen Gesamtaufbau und auch eine einfache Steuerung für die Zylinder-Kolbeneinheit aus. Am Ende der Schubstange des Horizontalförderers sitzt ein Schiebergehäuse, das mit Hilfe der hydraulischen Zylinder-Kolbeneinheit im Förderschacht hin- und hergehend antreibbar ist und an seinem freien Stirnende eine nach der Förderseite aufschwenkbare, als Preßplatte dienende Klappe trägt. Beim Betrieb wird der Mist portionsweise mit Hilfe des Schubstangenförderers weitergefördert, wobei die Mitnehmer des Schubstangenförderers beim Rücklauf ausschwenken. Die jeweils vorderste Mistportion gelangt beim Rücklauf durch das Schiebergehäuse hindurch vor die dabei aufgeschwenkte Schieberklappe, die beim nächsten Arbeitshub schließt und die Mistportion in den Förderschacht preßt, so daß der Mist am Ende des Förderschachtes als vorgepreßter Strang im Bodenbereich der Mistablagerstätte austritt und einen Hügel bildet. Der frisch zugeführte Mist befindet sich dabei im Inneren des Hügels, dessen Außenschichten vom länger gelagerten verrotteten Mist gebildet werden.

Nachteilig ist, daß der Mist im Zubringerförderer und mit Hilfe des Förderkolbens bzw. -schiebers horizontal im gleichen Höhenbereich gefördert wird. Deshalb muß im Stall ein tiefer Kotgraben für den Zubringerförderer vorgesehen werden und der Auslaß des Förderschachtes liegt häufig über dem Niveau des Bodens der vorgesehenen Ablagerunsstätte, was die Bildung eines sauberen Hügels beeinträchtigt und es häufig notwendig macht, stallseitig Stützmauern für die Mistablagerstätte vorzusehen, die verhindern, daß sich der Misthaufen bis zur Stallwand ausbreitet. Wenn die Tierstände im Stall bis nahe an die Stallmauer heranreichen, muß man die Zylinder-Kolbeneinheit und den vollständigen Arbeitsbereich des Förderschiebers oder -kolbens außerhalb des Stalles vorsehen und dort eine abnehmbare Abdeckung für den Schacht anbringen. Mit den verwendeten Förderschiebern sind nur kurze Förderlängen in einem entsprechend kurzen Förderschacht möglich. Auch aus diesem Grund wird der Horizontalförderer häufig aus dem Stall herausgeführt. Die Zylinder-Kolbeneinheit greift meist exzentrisch am Gehäuse des Förderschiebers an. Der Schieber arbeitet im Schacht gegen einen beträchtlichen Widerstand und die Mistportionen werden beim Durchwandern des Schiebergehäuses aufgelockert. Für die notwendige stirnseitige Klappe des Schiebers kann eine Zwangssteuerung notwendig werden. Die Breite des Förderschachtes muß an die Förderbreite des Zubringerförderers angepaßt werden, wenn man nicht beträchtliche Widerstände für die Umformung des Miststranges auf einen anderen Querschnitt in Kauf nehmen will.

Wegen der bei den gegenständlichen Förderanlagen auftretenden Schwierigkeiten werden auch Förderanlagen, sogenannte Maulwurfsentmistungen gebaut, bei denen ein als Horizontalförderer ausgebildeter Zubringerförderer und ein gesonderter, im Einlaßbereich arbeitender Förderkolben verwendet und mit eigenen Antriebseinheiten, meist hydraulischen Zylinder-Kolbeneinheiten versehen werden. Es ist dabei zwar möglich, für den Schrittförderer eine nur flache Kot rinne vorzusehen und den Förderschacht allenfalls zu neigen, um den Boden der Düngeablagerstätte wesentlich tiefer als den Stallboden anordnen zu können. Durch Verwendung eines geeigneten Preßkolbens können mit dem Förderschacht auch größere Förderstrecken als bei den bekannten Förderanlagen der eingangs genannten Art überbrückt werden. Nachteilig ist die bisher vorhandene Notwendigkeit, für die beiden Förderer eigene Antriebseinheiten, meist hydraulische Zylinder-Kolbeneinheiten vorzusehen und die beiden Förderer meist im Gegentakt aufeinander zu synchronisieren. Als Beispiel für eine bekannte Förderanlage dieser Art wird die DE-A-20 39 505 erwähnt. Wegen des hohen Aufwandes ist die Verwendung solcher Förderanlagen stark eingeschränkt.

Aus der CA-A-1 053 171 ist es bekannt, den Einlaßbereich eines mit einem Preßkolben arbeitenden Förderers als vom einem Zubringerförderer beschicktem Trichter auszubilden wobei ein zusätzlicher Arbeitszylinder vorgesehen ist, der aus dem im Trichter befindlichen Mistvorrat mittels eines Messers einen Strang schneidet, der dann mit Hilfe des Arbeitskolbens in den Förderschacht gepreßt wird. Hier sind schon für den zweiten Förderer zwei gesondert zu betätigende Zylinder-Kolbeneinheiten für Messer und Kolben mit entsprechend hohem Anlagenaufwand notwendig.

Aufgabe der Erfindung ist es, bei einer Förderanlage der genannten Art die aufgezeigten Nachteile zu beseitigen, dabei aber die Vorteile des einfachen Aufbaues und Antriebes und der einfachen Steuerung zu erhalten.

Die gestellte Aufgabe wird durch die im kennzeichnenden Teil des Anspruches 1 angegebenen Merkmale gelöst.

Die Vorteile der erfindungsgemäßen Anlage bestehen insbesondere darin, daß Förderkolben bzw. -schieber und Horizontalförderer der Höhe nach gegeneinander versetzt anbringbar sind, trotzdem aber mit einer einzigen Zylinder-Kolbeneinheit für den Antrieb das Auslangen gefunden wird, so daß die Antriebseinrichtung selbst und auch die für sie benötigte Steuereinrichtung einfach ausgebildet sein können. Die Zylinder-Kolbeneinheit drückt zentrisch auf den Förderkolben oder -schieber, so daß es zu keiner Belastung der Führungen und der Einheit selbst durch Biegekräfte kommt. Der Förderkolben drückt mit seine Stirnseite gegen den Mist, der vor dieser Stirnseite zugeführt wird und nicht wie bisher durch ein Schiebergehäuse wandert. Die Querschnittsbreite im Förderschacht ist nicht zwangsweise von der Breite des Zubringerförderers abhängig und kann kleiner gewählt werden, so daß mit hohem Druck des Förderkolbens oder -schiebers bei gegebener Leistung der Zylinder-Kolbeneinheit gearbeitet werden kann, wodurch sich die durchschnittliche Förderlänge und Aufbauhöhe des Misthaufens vergrößern. Die Einwurföffnung kann unmittelbar neben einer Stallmauer vorgesehen sein, wobei die Tierstände bis in die Nähe der Mauer vorgesehen werden können. Man kann die ZylinderKolbeneinheit in den Stallboden versenken und den Förderschacht vom Stall weg hinreichend tief verlegen, so daß er überfahren werden kann und außerhalb des Stalles keine Behinderung darstellt. Da die Einwurföffnung beim Förderhub abgeschlossen wird, kann kein Mist zur Rückseite der Druckplatte des Förderkolbens gelangen.

Mögliche Ausbildungen und Anordnungen der Mitnehmer entnimmt man den Ansprüchen 2 und 3.

Anspruch 4 gibt eine mögliche Ausführung an, nach der der Förderschacht geneigt verlaufen kann, so daß flüssige Mistbestandteile von der Einläßöffnung weg in den Förderschacht abfließen. Durch das Gefälle kann der Auslaßbereich des Förderschachtes tief gelegt werden.

Durch die Ausbildung nach Anspruch 5 wird ein Auseinanderzerren der Mistportionen verhindert, bevor sie durch die Einwurföffnung fallen.

Bei der Ausführung nach Anspruch 6 kann die Räumerklappe anschlagbegrenzt verschwenkbar oder auch zwangsgesteuert sein. Sie schwenkt nach Beendigung des Förderhubes beim Beginn des Rücklaufes etwas aus und ermöglicht dadurch einen Luftzutritt zur Stirnseite des Förderkolbens bzw. -schiebers, so daß sich dieser leicht von dem eben geförderten Mist löst und ihn nicht im Förderschacht zurücksaugt.

Vor allem bei horizontaler Anordnung kann der Förderkolben bzw. -schieber in Längsabständen von der Stirnplatte weitere beim Förderhub mit dem Boden des Förderschachtes zusammenwirkende, beim Rücklauf der ausschwenkende Räumerklappen tragen, um zu erreichen, daß Mistrückstände, die beim Preßvorgang am Förderkolben vorbeigelangt sind, wegbefördert werden und sich nicht im Lauf der Zeit an der Rückseite des Förderkolbens stauen.

Bei durch Bodenschlitze der Förderbahn oder einer Abdeckung geführten Mitnehmern kann man für dies parallel zu den Schlitzrändern verlegte gegeneinander drückende Dichtlippen aus gummielastischem Material vorsehen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigt

Fig. 1 in stark schematisierter Darstellungsform einen Teillängsschnitt durch einen Stallboden im Übergabebereich zwischen einem Horizontalförderer und einem Kolbenförderer bei eingefahrenem Kolbenförderer,

Fig. 2 in der Fig. 1 entsprechender Darstellungsweise die Stellung bei ausgefahrenem Kolbenförderer,

Fig. 3 einen Schnitt nach der Linie III-III der Fig. 1,

Fig. 4 eine Förderanlage mit im Querschnitt rechteckigem Förderschacht und entsprechendem Förderkolben in der Fig. 1 entsprechenden Darstellungsweise,

Fig. 5 einen Schnitt nach der Linie V-V der Fig. 4,

Fig. 6 eine Ausführung mit geneigtem Förderschacht in der Fig. 1 entsprechenden Darstellungsweise und

Fig. 7 eine der Fig. 6 ähnliche Ausführungsform mit abgeänderter Kupplung.

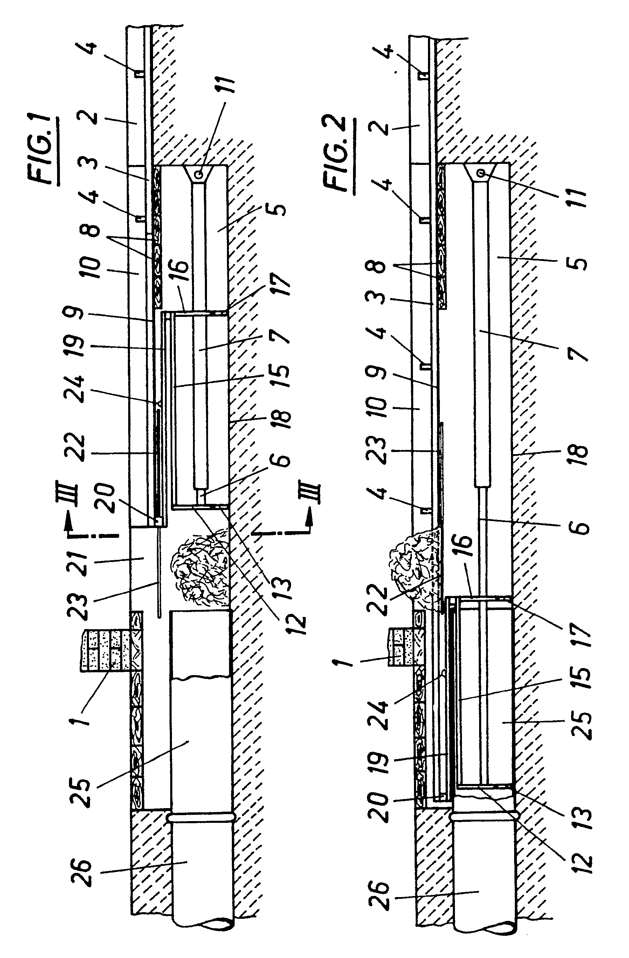

Nach den Fig. 1 bis 3 ist hinter einer nahe an eine Außenmauer 1 des Stalles heranreichenden Standreihe für Vieh eine seichte Kotrinne 2 vorgesehen, die als die Förderbahn eines schrittweise arbeitenden Horizontalförderers dient, der als Schubstangenförderer ausgebildet ist und dementsprechend eine in einer unteren Kante der Rinne 2 geführte Schubstange 3 mit abstandsweise angeordneten, beim Förderhub ausschwenkenden und sich beim Rücklauf an die Stange anlegenden Kratzern 4 aufweist. Der Abstand der Kratzer 4 ist etwas kleiner als der Förderhub der Schubstange 3.

Im dargestellten Endbereich ist unterhalb der Förderrinne 2 ein Aufnahmeraum 5 für einen hydraulischen Zylinder-Kolbentrieb 6, 7 ausgespart, der nach oben hin zum Teil durch eine abnehmbare Abdeckung 8 und zum anderen Teil durch eine Blechplatte 9 abgeschlossen ist, wobei die Blechplatte 9 Seitenwangen 10 trägt, die die Rinne 2 verlängern.

Die Zylinder-Kolbeneinheit 6, 7 ist gelenkig an einem Widerlager 11 abgestützt. Der Kolben 6 trägt an seinem vorderen Ende einen Förderkolben 12, der nach den Fig. 1 bis 3 als kreisrunde Platte ausgebildet ist, deren Unterteil 13 in Form eines Segmentes um ein Scharnier 14 in Förderrichtung ausschwenkbar, aber entgegen der Förderrichtung nicht über die in den Fig. 1 und 2 dargestellte Lage zurückschwenkbar ist. Mit dem Förderkolben 12 ist eine Führungsstange 15 verbunden, die einen Halter 16 für eine Räumerklappe 17 trägt, die über den Boden 18 verstellbar ist. Eine anschließende Stange 19 und ein vertikales Verbindungsstück 20 stellen die Verbindung zur Schubstange 3 her. Bei eingefahrener Zylinder-Kolbeneinheit 6, 7 bleibt vor den Teilen 20 und 12 eine Einwurföffnung 21 offen. Unter der Blechplatte 9 ist ein Deckel 22 in Seitenführungen 23 geführt, der über einen Anschlag 24 am Teil 19 beim Arbeitshub der Zylinder-Kolbeneinheit 6, 7 mitgenommen wird und, wie in Fig. 2 dargestellt, die Öffnung 21 nach oben hin abschließt. Der Mitnehmer 24 ist nachgiebig ausgebildet und gibt den Deckel 22 nach den Abschluß der Öffnung 21 frei, so daß er mit der Stange 19 auf die andere Seite weiterwandern kann. Beim Arbeitshub der Zylinder- Kolbeneinheit preßt der Kolben 12 eine vorher über die gossenförmig ausgebildete Öffnung 21 zugeführte Mistportion in einen von einem Rohr 25 und weiteren anschließenden Rohren 26 gebildeten Förderschacht, dessen Austrittsöffnung nach oben gerichtet im Boden einer Mistablagerstätte mündet. Beim Arbeitshub legt der im gleichen Takt mitgenommene Schubstangenförderer die nächste Mistportion über der Öffnung 21 auf dem in der Stellung nach Fig. 2 befindlichen Deckel 22 ab. Beim Zurückfahren der Zylinder-Kolbeneinheit 6, 7 – die in bekannter Weise über Endanschläge gesteuerte Umsteuerorgane betätigt und von einer Pumpe versorgt wird – tritt der Anschlag 24 unter dem Deckel 22 hindurch und der Teil 20 nimmt schließlich während des letzten Teiles der Einfahrbewegung den Deckel 22 mit, so daß die Mistportion, wie Fig. 1 zeigt, vor dem Förderkolben 12 in den Einlaßbereich des Förderschachtes fällt. Die Rohre 25, 26 können einbetoniert sein. Es ist auch möglich, aus diesen Rohren und weiteren anschließenden Rohren eine Rohrleitung zu bilden, über die der gepreßte Mist über verhältnismäßig weite Strecken transportiert werden kann. Das verschwenkbare Segment 13 erleichtert beim Rücklauf des Kolbens 12 dessen Ablösung vom vorher geförderten Mist.

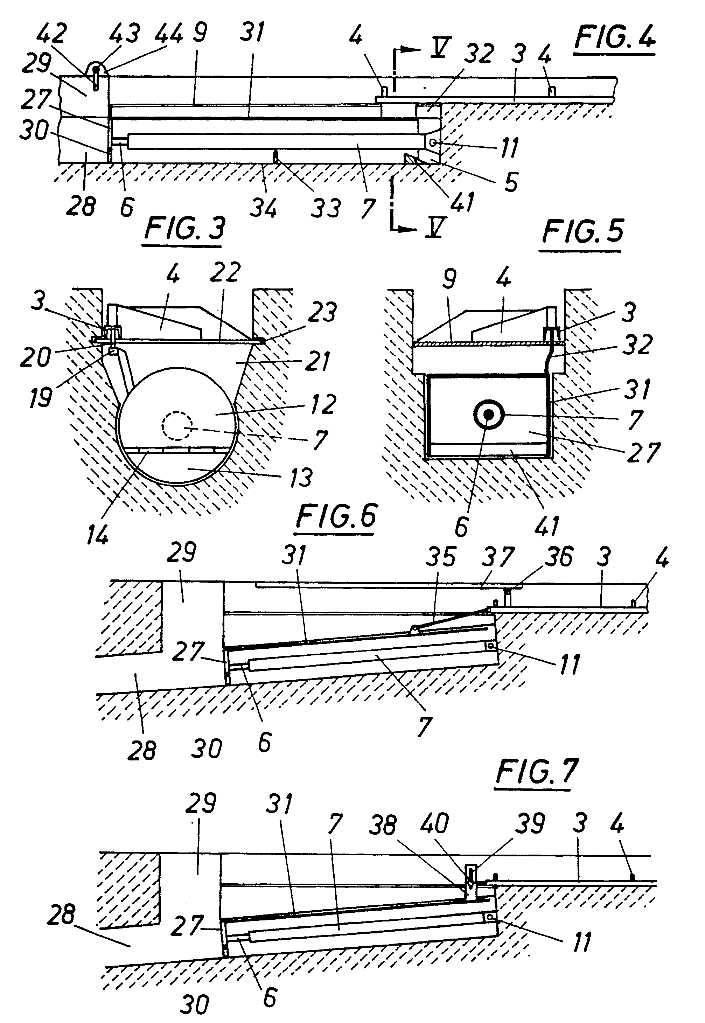

Nach den Fig. 4 und 5 ist statt dem runden durch ein Rohr gebildeten Förderschacht 25 nach den Fig. 1 bis 3 wenigstens im Arbeitsbereich des Förderkolbens 27 ein im Querschnitt rechteckiger Förderschacht 28 vorhanden, der wieder über eine Einlaßöffnung 29 vom Horizontalförderer 3, 4 aus beschickt wird. Der untere Teil 30 des Förderkolbens bildet wieder eine über ein Scharnier befestigte Klappe. Mit dem Kolben 27 ist ein im Querschnitt verkehrt U-förmiger Schieberkörper 31 verbunden, der über ein Schwert 32, das durch einen Schlitz der Platte 9 führt, die Antriebsverbindung zwischen der Zylinder-Kolbeneinheit 6, 7 und dem Horizontalförderer 3, 4 herstellt. Der Schieberkörper 31 schließt in der Ausfahrstellung die Einwurföffnung 29 ab. Zwischen den Seitenwänden des Schieberkörpers sind Räumerklappen 33 in Förderrichtung ausschwenkbar gelagert, die allenfalls unter die Zylinder-Kolbeneinheit eindringenden Mist am Boden 34 loskratzen und zur Förderseite des Kolbens 27 befördern. Am freien Ende des Schieberkörpers kann noch ein Keil 41 befestigt sein, um die Ecke der Ausnehmung 5 unterhalb der Abstützung 11 auszuräumen. Der Schacht 28 kann in der rechteckigen Querschnittsform zur Austrittsöffnung an der Mistablagerstätte führen. Es ist aber auch möglich, hinter dem Arbeitsbereich des Kolbens 27 einen Übergangsbereich vorzusehen und dort einen Übergang zu einem runden Förderschacht vorzunehmen.

Nach den Fig. 6 und 7 schließt der Förderschacht 28 mit Gefälle an den unter der Einwurföffnung 29 liegenden Bereich an und die Zylinder-Kolbeneinheit 6, 7 ist entsprechend diesem Gefälle angebracht. Nach Fig. 6 ist der Schieberkörper 31 über einen Lenker 35 mit der Schubstange 3 des Horizontalförders 3, 4 verbunden. Das Ende der Schubstange 3 trägt noch eine Führungsrolle 36, die mit einer Führungsschiene 37 in Eingriff steht. Führungsrolle 36 und -schiene 37 haben den Zweck, ein Verbiegen der Schubstange 3 bei der schrägen Kraftübertragung durch den Lenker 35 zu verhindern.

Auch die Ausführung nach Fig. 7 gestattet eine vertikale Abstandsänderung zwischen den Kraftangriffsbereichen an Schieber und Schubstange. Am Teil 31 sitzt hier eine hochstehende Lasche 38 mit einem eine Kulisse bildenden Langloch 39, in das ein mit der Schubstange 3 verbundener Gleitstein 40 eingreift.

Bei allen Ausführungen kann man Maßnahmen vorsehen, um ein Zurückschieben bzw. Auseinanderzetten der vom Horizontalförderer 3, 4 am Deckel 22 bzw. dem Mantel 31 des ausgeführten Schiebers 27 abgelegten Mistportion beim Zurückziehen des Schiebers bzw. Deckels zu verhindern. Vorzugsweise werden im Bereich der Einwurföffnung Rückhalter für die vom Horizontalförderer 3, 4 zugebrachte Mistportion vorgesehen. In Fig. 4 ist als Beispiel ein schwenkbar gelagerter Rückhalterechen 42 vorgesehen, dessen Schwenkachse 43 zwischen Seitenlaschen 44 gehalten ist. Man könnte auch von der Seite her in die Rinne eingreifende Rückhalteklappen oder andere Rücklaufsperren einsetzen.

## Ansprüche

1. Förderanlage für Stallmist, mit einem aus dem Stall zu einer Ablagerungsstelle führenden Förderschacht (28), einem über eine hydraulische Zylinder-Kolbeneinheit (6, 7) hin- und hergehend antreibbaren Förderkolben (12, 27) oder -schieber und einem ebenfalls von der Zylinder-Kolbeneinheit (6, 7) angetriebenen, schrittweise arbeitenden Zubringerförderer (3, 4), wobei der Förderkolben oder -schieber bei seinem nur über einen Bruchteil der Länge des Förderschachtes (25, 28) reichenden Arbeitshub die vom Zubringerförderer (3, 4) zugeführten Mistportionen übernimmt und in den Förderschacht (25, 28) preßt, und ein Einlaßbereich des Förderschachtes (25, 28) unter dem Abgabeende der Förderbahn des als Horizontalförderer (3, 4) ausgebildeten Zubringerföderers angeordnet und von diesem über eine Einwurföffnung (21, 29) beschickbar ist, dadurch gekennzeichnet, daß der Förderkolben (12, 27) oder -schieber mit einem Mantel (31) oder einem von ihm betätigbaren Deckel (22) versehen ist, mit dem er die Einwurföffnung bei seinem Förderhub abschließt und daß der von der zentrisch an ihm angreifenden hydraulischen Zylinder-Kolbeneinheit (6, 7) angetriebene Förderkolben (12, 27) oder -schieber bzw. die Zylinder-Kolbeneinheit (6, 7) selbst über nach oben geführte Mitnehmer (15, 19, 20, 32, 35, 38, 39, 40) mit dem Horizontalförderer (3) gekuppelt ist.

2. Förderanlage nach Anspruch 1, dadurch gekennzeichnet, daß die Mitnehmer (15, 19, 20) um eine obere Abdeckung (9) eines den eingefahrenen Förderkolben oder -schieber (12, 27) und die Zylinder-Kolbeneinheit (6, 7) versenkt aufnehmenden Bodenraumes herumgeführt sind.

3. Förderanlage nach Anspruch 1, dadurch gekennzeichnet, daß die Mitnehmer ein durch einen Bodenschlitz der Förderbahn geführtes Schwert (32) aufweisen.

4. Förderanlage nach Anspruch 1, dadurch gekennzeichnet, daß der Förderschacht (28) im Einlaßbereich und im Eingriffsbereich des Förderkolbens (27) bzw. -schiebers von der Einlaßöffnung nach unten geneigt ist, die Zylinder-Kolbeneinheit (6, 7) ebenfalls entsprechend geneigt angeordnet und als Mitnehmer eine eine vertikale Abstandsänderung zwischen den Angriffsstellen zulassende Kupplung, insbesondere eine Lenkerverbindung (35) oder eine Kulissen-Gleitsteinverbindung (38 bis 40) zwischen dem Förderkolben bzw. -schieber (27) und dem Horizontalförderer (3, 4) vorgesehen ist.

5. Förderanlage nach einem der Ansprüche 1 bis 4, dadurch gekennzeichnet, daß im Bereich der Einwurföffnung (21, 29) Rückhalter (42) für die vom Horizontalförderer (3, 4) auf den Mantel (31) des ausgefahreren Schiebers (27) bzw. den Deckel (22) abgelegte Mistportion vorgesehen sind.

6. Förderanlage nach einem der Ansprüche 1 bis 5, dadurch gekennzeichnet, daß eine Stirnplatte (12, 27) des Förderkolbens oder -schiebers in ihrem unter dem Angriffsbereich der Zylinder-Kolbeneinheit (6, 7) befindlichen unteren Bereich als beim Rücklauf nach der Förderseite ausschwenkbare Räumerklappe (13, 30) ausgebildet ist.

7. Förderanlage nach einem der Ansprüche 1 bis 5 dadurch gekennzeichnet, daß der Förderkolben bzw. -schieber in Längsabständen von der Stirnplatte (12, 27) weitere mit dem Boden des Förderschachtes (25, 28) zusammenwirkende, beim Rücklauf ausschwenkbare Räumerklappen (17, 33) trägt.

## Claims

1. A plant for conveying dung from accommodation for animals, comprising a conveyor duct (28), which extends from the accommodation to a dump, a conveying piston (12, 27) or pusher, which is adapted to be driven to reciprocate by a hydraulic cylinder-piston unit (6, 7) and an intermittently operating feed conveyor (3, 4), which is also driven by the cylinder-piston unit (6, 7) wherein the conveying piston or pusher during its working stroke, which reaches only over a fractional part of the length of the conveyor duct (25, 28), takes over the dung portions which have been fed by the feed conveyor (3, 4) and forces them into the conveyor duct (25, 28), an inlet portion of the conveyor duct (25, 28) is disposed under the delivery and of the conveyor path of the feed conveyor, which consists of a horizontal conveyor (3, 4) and said inlet portion is adapted to be fed by said feed conveyor through a throw-in opening (21, 29), characterized in that the conveying piston (12, 27) or pusher is provided with a shell (31) or with a cover (22), which is operable by said piston and by which shell or cover said piston or pusher closes throw-in opening during its conveying stroke, and that the conveying piston (12, 27) or pusher, which is driven by the hydraulic cylinder-piston unit (6, 7), which acts centrally on said piston or pusher, or the cylinder-piston units (6, 7) itself, is coupled to the horizontal conveyor (3) by a plurality of rising coupling means (15, 19, 20, 32, 35, 38, 39, 40).

2. A conveying plant according to claim 1, characterized in that the coupling means (15, 19, 20) extend around a top cover (9) of a bottom space, in which the retracted conveying piston or pusher (12, 27) and the cylinder-piston unit (6, 7) are accommodated in a lowered position.

3. A conveying plant according to claim 1, characterized in that the coupling means comprise a sword (32), which extends through a bottom slot of the conveying path.

4. A conveying plant according to claim 1, characterized in that the conveyor duct (28) is downwardly inclined from the inlet opening in the inlet portion and in the portion which receives the conveyor piston (27) or pusher, the cylinder-piston unit (6, 7) is arranged with a corresponding inclination and one coupling means comprises a coupling which permits a change of the vertical distance between the points of engagement of said coupling and particularly consists of a linkage or a cam slot-slider coupling (38 to 40) between the conveying piston or pusher (27) and the horizontal conveyor (3, 4).

5. A conveying plant according to any of claims 1 to 4, characterized in holding-back means (42) for the dung portion which has been deposited by the horizontal conveyor (3, 4) on the shell (31) of the extended pusher (27) or on the cover (22) are provided adjacent to the throw-in opening (21, 29).

6. A conveying plant according to any of claims 1 to 5, characterized in that an end plate (12, 27) of the conveying piston or pusher comprises a lower portion which is disposed under the portion engaged by the cylinder-piston unit (6, 7) and in that portion comprises a clearer flap (13, 30), which during the return movement is adapted to be swung out towards the conveyor side.

7. A conveying plant according to any of claims 1 to 5, characterized in that the conveying piston or pusher carries additional clearer flaps (17, 33), which are longitudinally spaced apart from the end plate (12, 27) and cooperate with the bottom of the conveyor duct (25, 28) and are adapted to be swung out during the return movement.

## Revendications

1. Installation de transport pour fumier d'étable comprenant une fosse de transport (28) qui mène de l'étable à un emplacement de stockage un piston transporteur (12, 27) ou un poussoir transporteur, qui peut être entraîné en va-et-vient au moyen d'une unité hydraulique à cylindre-piston (6, 7) et un transporteur d'alimentation (3, 4), lui aussi entraîné par l'unité à cylindre à piston (6, 7), travaillant par intermittence dans laquelle, dans sa course travaillante qui ne s'étend que sur une fraction de la longueur de la fosse de transport (25, 28), le piston ou poussoir transporteur prend en charge les portions de fumier acheminées par le transporteur d'alimentation (3, 4) et les comprime dans la fosse de transport (25, 28), et une région d'admission de la fosse de transport (25, 28) est disposée au-dessous de l'extrémité de déchargement de la voie de transport du transporteur d'alimentation constitué par un transporteur horizontal (3, 4) et peut être alimenté par ce dernier à travers une ouverture de chargement (21, 29), caractérisé en ce que le piston transporteur (12, 27) ou le poussoir transporteur est muni d'une jupe (31) ou d'-un couvercle (22) actionné par ce piston avec laquelle ou lequel il ferme l'ouverture de chargement dans sa course de transport et en ce que le piston transporteur (12, 27) ou le poussoir transporteur qui est entraîné par l'unité hydraulique à cylindre-piston (6, 7) qui l'attaque en son centre ou encore l'unité à cylindre et piston (6, 7) elle-même, est accouplé au transporteur horizontal (3) par l'intermédiaire d'entraîneurs (15, 19, 20, 32, 35, 38, 39, 40) qui s'étendent vers le haut.

2. Installation de transport selon la revendication 1, caractérisée en ce que les entraîneurs (15, 19, 20) passent autour d'une fermeture supérieure (9) d'une chambre de plancher dans laquelle sont encastrés le piston ou poussoir transporteur (12, 27) rétracté, et l'unité à cylindre-piston (6, 7).

3. Installation de transport selon la revendication 1, caractérisée en ce que les entraîneurs présentent une lame (32) qui passe à travers une fente du fond de la voie de transport.

4. Installation de transport selon la revendication 1, caractérisée en ce que, dans la région d'admission et dans la région d'action du piston transporteur (27) ou du poussoir transporteur, la fosse de transport (28) est inclinée vers le bas, à partir de l'ouverture d'admission l'unité à cylindre-piston (6, 7) est elle aussi inclinée avec une pente correspondante et il est prévu comme entraîneur, un accouplement qui admet une variation de la distance verticale entre les zones d'attaque en particulier une liaison à biellettes (35) ou une liaison à glissière et coulisseau (38 à 40) entre le piston ou poussoir transporteur (27) et le transporteur horizontal (3, 4).

5. Installation de transport selon l'une des revendications 4, caractérisée en ce que dans la région de l'ouverture de chargement (21, 29), sont prévus des organes de retenue (42) pour la portion de fumier qui est déposée par le transporteur horizontal (3, 4) sur la jupe (31) du poussoir (27) mis en position d'extension, ou sur le couvercle (22).

6. Installation de transport selon l'une des revendications 1 à 5, caractérisée en ce qu'une plaque frontale (12, 27) du piston ou poussoir transporteur forme, dans sa région inférieure qui se trouve au-dessous de la région d'attaque de l'unité cylindre-piston (6, 7), un volet racleur (13, 30) qui peut s'effacer par pivotement vers le côté du transport pendant la course de retour.

7. Installation de transport selon l'une des revendications 1 à 5, caractérisée en ce que le piston ou poussoir transporteur porte à différentes distances longitudinales de la plaque frontale (12, 27), d'autres volets racleurs (17, 33) coopérant avec le fond de la fosse de transport (25, 28), et qui peuvent s'effacer par pivotement lors de la course de retour.

FIG.1

FIG.2

FIG.4

FIG.3

FIG.5

FIG.6

FIG.7